Europäisches Patentamt

European Patent Office

Office européen des brevets

(19)

(11) **EP 0 590 250 B1**

(12) **EUROPÄISCHE PATENTSCHRIFT**

(45) Veröffentlichungstag und Bekanntmachung des Hinweises auf die Patenterteilung:
**12.03.1997  Patentblatt 1997/11**

(51) Int Cl.⁶: $G05D\ 23/19$, $F24D\ 19/10$

(21) Anmeldenummer: **93110989.6**

(22) Anmeldetag: **09.07.1993**

(54) **Verfahren zur Einstellung der Heizkennlinie eines Heizkreisreglers**

Method for heat characteristics adjustment of a heating circuit controller

Méthode de réglage de caractéristique de chauffe d'un régulateur de circuit de chauffage

(84) Benannte Vertragsstaaten:
**AT CH DE DK FR GB LI SE**

(30) Priorität: **28.09.1992  CH 3024/92**

(43) Veröffentlichungstag der Anmeldung:
**06.04.1994  Patentblatt 1994/14**

(73) Patentinhaber: **Landis & Gyr Technology Innovation AG**
**6301 Zug (CH)**

(72) Erfinder:
• **Affolter, Erhard**
  **CH-4937 Ursenbach (CH)**
• **Kocher, Peter**
  **CH-6043 Adligenswil (CH)**

(74) Vertreter: **Müller, Hans-Jürgen, Dipl.-Ing. et al**
**Patentanwälte Dipl.-Ing. Hans-Jürgen Müller,**
**Dipl.-Chem.Dr. Gerhard Schupfner,**
**Dipl.-Ing. Hans-Peter Gauger,**
**Postfach 101161**
**80085 München (DE)**

(56) Entgegenhaltungen:
EP-A- 0 076 398    DE-A- 3 502 873
DE-A- 3 537 104    US-A- 5 167 365

## Beschreibung

Die Erfindung bezieht sich auf ein Verfahren zur Einstellung der Heizkennlinie eines Heizkreisreglers der im Oberbegriff des Anspruchs 1 genannten Art.

Solche Verfahren eignen sich beispielsweise zur benutzerfreundlichen Einstellung der optimalen Lage der Heizkennlinie eines witterungs- und/oder lastgeführten Heizkreisreglers einer Heizungsanlage durch einen Benutzer der Heizungsanlage.

Es ist ein Verfahren dieser Art bekannt (EP 0 444 296 AI), bei dem der Benutzer mittels eines Einstellgerätes den Sollwert der Raumtemperatur anheben oder absenken kann, wonach der Heizkreisregler abhängig von der vorliegenden Aussentemperatur entweder die Heizkennlinie parallel verschiebt oder dann die Steilheit der Heizkennlinie verändert.

Darüber hinaus ist ein Verfahren zur Heizkennlinieneinstellung eines Heizkreisreglers einer Heizungsanlage bekannt (EP-A-0 076 398), bei dem die Regelung unmittelbar von der Außentempe-ratur abhängig stattfindet, wodurch sich der Korrektureingriff in die Regelung als selbsttätige Korrektur bzw. Anpassung der Heizkurve an die den Wärmebedarf beeinflussenden Gebäudeparameter auswirkt. Diese Regelung wird realisiert durch Ermittlung der Sollwertabweichungen zu diskreten Zeitpunkten; der Mittelwert solcher sich über mehrere Tage erstreckenden Zeitpunkte nimmt die Korrektur vor.

Darüber hinaus ist ein Verfahren bekannt (DE-A-3 537 104), bei dem eine zufällig eingestellte Heizkurve selbsttätig im Sinne einer Optimierung an Benutzerwünsche angepaßt wird. Die Optimierung erfolgt jeweils nur dann, wenn Außentemperatur, Vorlauftemperatur und Raumtemperatur für eine gewisse Zeit lang innerhalb gewisser Grenzen geblieben sind. Darüber hinaus ist Voraussetzung für diese Anpassung, daß die Außentemperatur derart tief liegt, daß die Heizung des Gebäudes praktisch ausschließlich von ihr abhängt. Während eines nichtstationären Zustands ist das Steuersystem gesperrt.

Schließlich ist ein Verfahren bekannt (DE-A-3 502 873), bei dem sich die Heizkennlinie einer Heizeinrichtung der Beheizungskennlinie eines Gebäudes anpaßt, was eine Anpassung an den jeweiligen Gebäudeparameter voraussetzt. Zu diesem Zweck findet die Anpassung periodisch, beispielsweise einmal täglich, oder durch jeweilige Handeinstellung statt. Die Vorlauftemperatur wird ausgehend von einer über einen vorbestimmten Zeitraum ermittelten mittleren Abweichung des Ist-Wert vom Soll-Wert der Raumtemperatur geregelt.

Der Erfindung liegt die Aufgabe zugrunde, ein Verfahren anzugeben, bei dem sich die Heizkennlinie eines Heizkreisreglers auf einfache Weise benutzerfreundlich an den vom Benutzer gewünschten Sollwert der Raumtemperatur selbsttätig mit der erforderlichen Genauigkeit anpaßt.

Die Erfindung ist im Anspruch 1 gekennzeichnet und vorteilhafte Ausgestaltungen sind in Unteransprüchen beansprucht.

Es ist an sich bereits ein Heizungs- und Brauchwasserregelungs- system bekannt (Landis & Gyr, "SIGMAGYR RVP DIGITAL", Beschreibung CE1P2440 D, Juli 1989, Kapitel 5.4), welches selbsttätig immer um Mitternacht eine mittlere Raumtemperaturabweichung des vergangenen Tages verarbeitet und die Heizkennlinie so adaptiert, daß die festgestellte Raumtemperaturabweichung für die kommenden Tage möglichst vollständig kompensiert wird. Je nach Außentemperatur kompensiert das Regelungssystem die Raumtemperaturabweichung durch eine Parallelverschiebung der Heizkennlinie und/oder durch ein Verändern der Steilheit.

Bei der vorliegenden Erfindung findet die Anpassung jeweils nach der Sollwertveränderung der Raumtemperatur statt.

Nachfolgend werden Ausführungsbeispiele der Erfindung anhand der Zeichnung näher erläutert. Es zeigen:

Fig. 1    Heizkennlinien eines Heizkreisreglers,

Fig. 2    durch eine Parallelverschiebung oder durch eine Drehung angepasste Heizkennlinien,

Fig. 3    durch eine Parallelverschiebung und eine Drehung angepasste Heizkennlinien und

Fig. 4    den Verlauf von zwei Gewichtungsfunktionen.

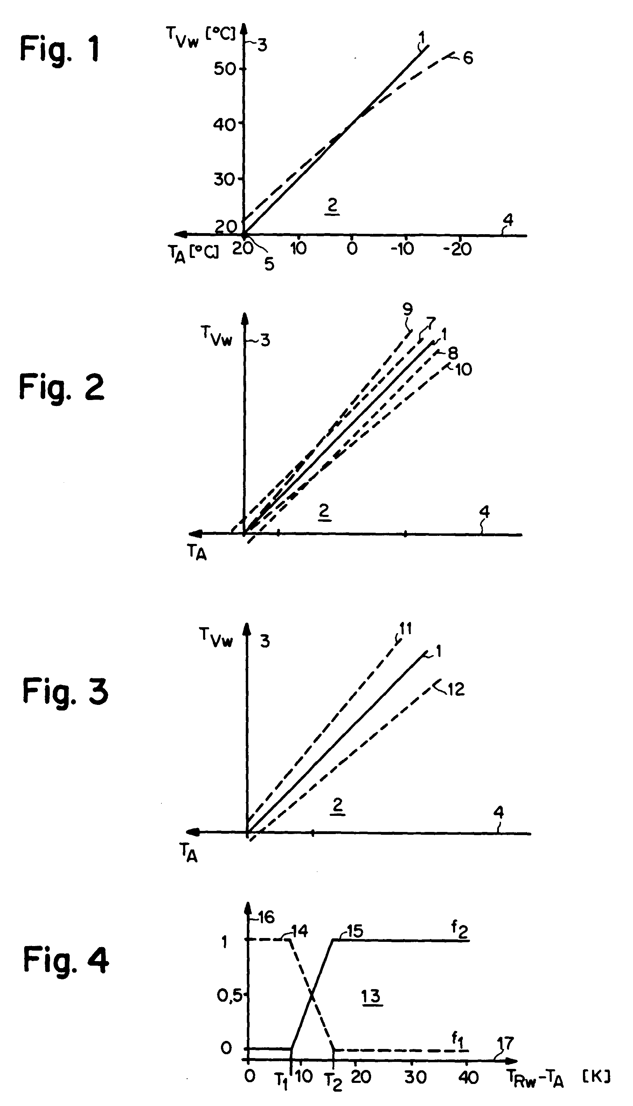

In der Fig. 1 bedeutet 1 eine Heizkennlinie eines Heizkreisreglers in einem Koordinatensystem 2, auf dessen Ordinate 3 eine Temperatur eines Wärmeträgermediums einer Heizungsanlage eines Gebäudes und auf dessen Abszisse 4 eine von einem Witterungsfühler erfassbare Witterungstemperatur abgetragen ist. Beispielhaft ist die Temperatur des Wärmeträgermediums eine Vorlauftemperatur $T_V$ einer Warmwasser-Heizungsanlage und die Witterungstemperatur eine gedämpfte Aussentemperatur $T_A$ des Gebäudes.

Die Aussentemperatur $T_A$ ist situationsgerecht aus mindestens teilweise gefilterten Messwerten gebildet und berücksichtigt damit die Bauweise des Gebäudes und den gewünschten Einfluss einer Änderung der Witterungstemperatur.

Die Heizkennlinie 1 stellt den Vorlauftemperatur-Sollwert $T_{VW}$ in Abhängigkeit von der Aussentemperatur $T_A$ dar, wobei höhere Temperaturen in Pfeilrichtung abgetragen sind.

Der Einfachheit halber ist die Heizkennlinie 1 als eine Gerade dargestellt, welche in ihrer Lage von einem Raumtemperatur-Sollwert $T_{RW}$ und einer Steilheit s bestimmt ist und aus deren Gleichung für einen Wert der Aussentemperatur $T_A$ ein Vorlauftemperatur-Sollwert $T_{Vw}$ berechenbar ist. Die Gerade wird mit folgender Gleichung beschrieben:

$$T_{Vw} = T_{Rw} + (T_{Rw} - T_A) \cdot s \qquad \text{(G1)}$$

Der Raumtemperatur-Sollwert $T_{Rw}$ ist derjenige Temperaturwert, den der Benutzer für einen Raum wünscht, auf den der Heizungsregler ausgerichtet ist.

Für die Steilheit s gilt $s \geq 0$. In der Gleichung (G1) ist ersichtlich, dass eine Variation des Raumtemeratur-Sollwerts $T_{Rw}$ eine Parallelverschiebung der Heizkennlinie 1 bewirkt: eine Erhöhung des Raumtemperatur-Sollwerts $T_{Rw}$ verschiebt die Heizkennlinie 1 parallel nach oben, das heisst, in die Richtung der grösseren Vorlauftemperatur; eine Erniedrigung des Raumtemperatur-Sollwertes $T_{Rw}$ verschiebt die Heizkennlinie 1 parallel nach unten.

Im weiteren geht aus der Gleichung (G1) hervor, dass ein Verändern der Steilheit s eine Drehung der Heizkennlinie 1 bewirkt; eine Vergrösserung des Wertes der Steilheit s stellt eine Drehung der Heizkennlinie 1 im mathematisch positiven Drehsinn (entgegen dem Uhrzeiger) um einen bestimmten Drehpunkt 5 dar, eine Verkleinerung des Wertes entspricht einer Drehung im negativen Drehsinn um den Drehpunkt 5. Bei der Heizkennlinie 1 nach der Gleichung (G1) liegt der Drehpunkt 5 auf der Geraden an der Stelle $T_A = T_{RW}$.

Mit 6 ist eine vorteilhafte, gekrümmte Heizkennlinie bezeichnet, welche im Heizkreisregler als eine mathematische Funktion oder als Tabelle ausgeführt (implementiert) ist.

Mit einer Grösse L [K] und einer weiteren Grösse q [$K^{-1}$] ist die gekrümmte Heizkennlinie 6 durch die Gleichung

$$T_{Vw} = T_{Rw} + (L + (T_{Rw} - T_A) - q \cdot (T_{Rw} - T_A)^2) \cdot s \qquad \text{(G2)}$$

im Heizkreisregler mit guter Näherung darstellbar. Bei Bedarf kann die gekrümmte Heizkennlinie 6 auch mit einer anderen Gleichung höheren Grades oder durch die Gleichungen von mindestens zwei sich schneidenden Geraden angenähert sein.

Die Fig. 2 zeigt die Heizkennlinie 1, welche durch eine Parallelverschiebung nach oben in eine zweite Heizkennlinie 7 und durch eine Parallelverschiebung nach unten in eine dritte Heizkennlinie 8 und auch durch eine Drehung im positiven Drehsinn in eine vierte Heizkennlinie 9 und zudem durch eine Drehung im negativen Drehsinn in eine fünfte Heizkennlinie 10 transformiert ist.

Die Heizungsanlage weist ein Bedienungselement zur manuellen Eingabe einer Veränderung des Raumtemperatur-Sollwertes $T_{Rw}$ durch einen Benutzer auf. Das Bedienungselement ist beispielsweise durch Tasten, Schalter oder Potentiometer verwirklicht. Mit Vorteil wird die Eingabe durch ein Echo eines Anzeigeelementes, beispielsweise einer Leuchtdiode, quittiert.

Mit Vorteil weist das Bedienungselement zwei Tasten auf, so dass durch eine erste Taste der Raumtemperatur-Sollwert $T_{Rw}$ erhöht und durch eine zweite Taste erniedrigt werden kann.

Der Raumtemperatur-Sollwert $T_{Rw}$ wird vorteilhaft pro Tastendruck um einen vorbestimmten vorzeichenbehafteten Korrekturwert $\delta T_T$ erhöht, beziehungsweise erniedrigt. Der Korrekturwert $\delta T_T$ beträgt vorzugsweise etwa +0,5 K, wenn der Raumtemperatur-Sollwert $T_{Rw}$ erhöht werden soll, oder -0,5 K, wenn der Raumtemperatur-Sollwert $T_{Rw}$ erniedrigt werden soll.

Nach einer manuellen Eingabe eines neuen Raumtemperatur-Sollwertes $T_{Rw}$ mittels des Bedienungselementes erfolgt im Heizkreisregler eine selbsttätige Anpassung der Heizkennlinie 1 bzw. 6 an den neuen Raumtemperatur-Sollwert $T_{Rw}$ abhängig vom aktuellen Wert der gedämpften Aussentemperatur $T_A$, welche vorteilhafterweise bestimmt, ob die Heizkennlinie 1 bzw. 6 durch eine Parallelverschiebung (gemäss Fig. 2, Heizkennlinie 7 und 8) oder durch eine Drehung (gemäss Fig. 2, Heizkennlinien 9 und 10) oder auch durch eine Parallelverschiebung in Verbindung mit einer Drehung angepasst wird.

Die Fig. 3 zeigt die Heizkennlinie 1, die durch eine Parallelverschiebung nach oben in Verbindung mit einer Drehung im positiven Drehsinn in eine sechste Heizkennlinie 11 und durch eine Parallelverschiebung nach unten in Verbindung mit einer Drehung im negativen Drehsinn in eine siebte Heizkennlinie 12 transformiert ist.

Eine an der Heizkennlinie 1 bzw. 6 auszuführende Parallelverschiebung wird durch eine Veränderung des Raumtemperatur-Sollwertes $T_{Rw}$ in der Gleichung (G1) bzw. (G2) der Heizkennlinie 1 bzw. 6 bewirkt, während eine notwendige Drehung der Heizkennlinie 1 bzw. 6 durch eine Veränderung der Steilheit s in der Gleichung (G1) bzw. (G2) der Heizkennlinie 1 bzw. 6 erreicht wird.

Eine vorteilhafte, genügend genaue Anpassung der Heizkennlinie 1 bzw. 6 wird erreicht, indem die vorzunehmende Parallelverschiebung und/oder die Drehung mittels Gewichtungsfunktionen berechnet werden/wird, welche mindestens von der Aussentemperatur $T_A$ abhängig sind.

Mit einer ersten Gewichtungsfunktion $f_1$ und einer zweiten Gewichtungsfunktion $f_2$ werden für die Anpassung ein Verschiebungsanteil $\delta T_{Rw}$ und ein Drehungsanteil $\delta s$ wie folgt berechnet:

$$\delta T_{Rw} = \delta T_T \cdot f_1 \qquad \text{(G3)}$$

$$\delta s = \delta T_T \cdot (1 + s)/(T_{Rw} - T_A) \cdot f_2 \qquad \text{(G4)}$$

wobei für die Berechnung des Drehungsanteils $\delta s$ in der Formel (G4) für die Steilheit s und für den Raumtemperatur-Sollwert $T_{Rw}$ die geltenden Werte vor der Anpassung verwendet werden.

Das Vorzeichen des Verschiebungsanteils $\delta T_{Rw}$ ist, wie auch das Vorzeichen des Drehungsanteils $\delta s$, gleich wie das Vorzeichen des Korrekturwertes $\delta T_T$.

Die geltende Heizkennlinie 1 bzw. 6 wird angepasst, indem in ihrer Gleichung (G1) bzw. (G2) der Raumtemperatur-Sollwert $T_{RW}$ durch die aus dem geltenden Raumtemperatur-Sollwert $T_{Rw}$ und dem Verschiebungsanteil $\delta T_{Rw}$ gebildete Summe $T_{Rw}+\delta T_{Rw}$ und die Steilheit $s$ durch die aus der geltenden Steilheit $s$ und dem Drehungsanteil $\delta s$ gebildeten Summe $s + \delta s$ ersetzt werden.

In der Fig. 4 ist in einem kartesischen Koordinatensystem 13 mit 14 ein vorteilhafter Verlauf der ersten Gewichtungsfunktion $f_1$ und mit 15 ein vorteilhafter Verlauf der zweiten Gewichtungsfunktion $f_2$ dargestellt. Die Funktionswerte sind auf der Ordinate 16 abgetragen, liegen in einem Bereich von null bis eins und sind von einer auf der Abszisse abgetragenen, aus dem Raumtemperatur-Sollwert $T_{Rw}$ und der gedämpften Aussentemperatur $T_A$ gebildeten Differenz $T_{Rw} - T_A$ abhängig. Bei jedem Wert der Differenz $T_{Rw}-T_A$ ist die aus dem Funktionswert der ersten Gewichtungsfunktion $f_1$ und dem Funktionswert der zweiten Gewichtungsfunktion $f_2$ gebildete Summe eins.

In einem ersten, zwischen null und einen ersten Wert $T_1$ liegenden Wertebereich der Differenz $T_{Rw}-T_A$ beträgt der Funktionswert der ersten Gewichtungsfunktion $f_1$ eins und der Funktionswert der zweiten Gewichtungsfunktion $f_2$ null, in einem zweiten, zwischen dem ersten Wert $T_1$ und einem zweiten Wert $T_2$ liegenden Wertebereich der Differenz $T_{Rw}-T_A$ nimmt der Funktionswert der ersten Gewichtungsfunktion $f_1$ von eins linear auf null ab während der Funktionswert der zweiten Gewichtungsfunktion $f_2$ von null linear auf eins zunimmt, wobei die erste Gewichtungsfunktion $f_1$ beim zweiten Wert $T_2$ den Funktionswert null und die zweite Gewichtungsfunktion $f_2$ beim zweiten Wert $T_2$ den Wert eins erreicht. In einem dritten, oberhalb des zweiten Wertes $T_2$ liegenden Wertebereich der Differenz $T_{Rw}-T_A$ beträgt der Funktionswert der ersten Gewichtungsfunktion $f_1$ null, und der Funktionswert der zweiten Gewichtungsfunktion $f_1$ ist eins.

Eine vorteilhafte Anpassung der Heizkennlinie 1 bzw. 6 wird erreicht, wenn der erste Wert $T_1$ bei etwa 8 K und der zweite Wert $T_2$ bei etwa 16 K liegt.

Mit Vorteil wird eine Grundeinstellung der Heizkennlinie 1 bzw. 6 entweder werkseitig oder dann bei einer Installation des Heizkreisreglers von einem Fachmann vor Ort vorgenommen.

Die Möglichkeit der manuellen Veränderung des Raumtemperatur-Sollwertes $T_{Rw}$ durch den Benutzer wird vorteilhaft vom Regler selbsttätig derart eingeschränkt, dass eine zu grosse Veränderung - beispielsweise mehr als ±5 K - und/oder aufeinanderfolgende Veränderungen innerhalb einer zu kurzen Zeitspanne - beispielsweise innerhalb 3 h - nicht ausführbar sind.

Dadurch, dass nach einer manuellen Veränderung des Raumtemperatur-Sollwertes $T_{Rw}$ der Heizkreisregler die Heizkennlinie 1 bzw. 6 aus ihrer bisherigen Lage je nach dem Wert der Aussentemperatur $T_A$ entweder durch eine Parallelverschiebung oder durch eine Drehung oder auch durch eine Parallelverschiebung in Verbindung mit einer Drehung selbsttätig in eine neue Lage bringt, ist die Heizkennlinie mit der gewünschten Genauigkeit an die manuelle Veränderung anpassbar. Die Veränderung setzt keinen Fachmann voraus, sie kann von einem beliebigen Benutzer der Heizungsanlage vorgenommen werden. Der Entscheid, durch welche Transformation/Transformationen die Heizkennlinie 1 bzw. 6 vorteilhaft anzupassen ist, wird aufgrund der beiden Gewichtungsfunktionen $f_1$ und $f_2$ besonders einfach durchführbar.

Das Verfahren ermöglicht die benutzerfreundliche Anpassung der Heizkennlinie 1 bzw. 6 an den vom Benutzer gewünschten Raumtemperatur-Sollwert $T_{Rw}$.

## Patentansprüche

1. Verfahren zur Einstellung der Heizkennlinie (1; 6) eines Heizkreisreglers für eine Heizungsanlage, von der eine Temperatur eines Wärmeträgermediums an den jeweiligen Wärmestrombedarf anpaßbar ist und die ein Bedienungselement zur manuellen Eingabe [-] eines [-] Raumtemperatur-Sollwertes ($T_{RW}$) [-] aufweist, wobei die Einstellung der Heizkennlinie (1,6) von der [-] Außentemperatur ($T_A$) abhängig ist,
   **dadurch gekennzeichnet,**
   daß nach einer manuellen [-] Veränderung des Raumtemperatur-Sollwertes (TRW) der Heizkreisregler die Heizkennlinie (1;6) aus ihrer bisherigen Lage [-] mittels vorgegebener, mindestens von der Außentemperatur ($T_A$) und dem Raumtemperatur-Sollwert ($T_{RW}$) abhängiger Funktionen (f1(TRW, TA); f2(TRW,TA)) durch eine Parallelverschiebung oder durch eine Drehung oder auch durch eine Parallelverschiebung in Verbindung mit einer Drehung selbsttätig in eine neue Lage bringt.

2. Verfahren nach Ansprüch 1,
   **dadurch gekennzeichnet**,
   daß der Betrag der Parallelverschiebung von einer ersten von der Außentemperatur ($T_A$) abhängigen Gewichtungsfunktion und das Ausmaß der Drehung von einer zweiten von der Außentemperatur ($T_A$) abhängigen Gewichtungsfunktion mitbestimmt werden.

3. Verfahren nach Anspruch 2,
   **dadurch gekennzeichnet**, daß für die beiden Gewichtungsfunktionen je ein Wert im Wertebereich von null bis eins gewählt wird, daß die Funktionswerte beider Gewichtungsfunktionen von einer aus dem bisherigen Raumtemperatur-Sollwert ($T_{RW}$) und einem Wert der gedämpften Außentemperatur

($T_A$) gebildeten Differenz ($T_{RW}$-$T_A$) abhängig gemacht werden und daß bei jeder Differenz ($T_{RW}$-$T_A$) die aus dem Funktionswert der ersten Gewichtungsfunktion und dem Funktionswert der zweiten Gewichtungsfunktion gebildete Summe eins gewählt wird.

4. Verfahren nach Anspruch 3,
   **dadurch gekennzeichnet**,
   daß für einen ersten, zwischen null und einem ersten Wert ($T_1$) liegenden Wertebereich der Differenz ($T_{RW}$-$T_A$) der Funktionswert der ersten Gewichtungsfunktion eins und der Funktionswert der zweiten Gewichtungsfunktion null gewählt werden, daß für einen zweiten, zwischen dem ersten Wert ($T_1$) und einem zweiten Wert ($T_2$) liegenden Wertebereich der Differenz ($T_{RW}$-$T_A$) der Funktionswert der ersten Gewichtungsfunktion von eins linear auf null abnehmend gewählt und der Funktionswert der zweiten Gewichtungsfunktion von null linear auf eins zunehmend gewählt werden, wobei die erste Gewichtungsfunktion beim zweiten Wert ($T_2$) den Funktionswert null und die zweite Gewichtungsfunktion beim zweiten Wert ($T_2$) den Wert eins erreicht, und daß für einen dritten, oberhalb des zweiten Wertes ($T_2$) liegenden Wertebereich der Differenz ($T_{RW}$-$T_A$) der Funktionswert der ersten Gewichtungsfunktion null und der Funktionswert der zweiten Gewichtungsfunktion eins gewählt wird.

## Claims

1. A method of setting the heating characteristic (1; 6) of a heating circuit regulator for a heating installation, by which a temperature of a heat carrier medium can be adapted to the respective heat flow demand and which has an operating element for the manual input of a room temperature reference value ($T_{RW}$), wherein the setting of the heating characteristic (1, 6) is dependent on the outside temperature ($T_A$), characterised in that after a manual alteration in the room temperature reference value ($T_{RW}$) the heating circuit regulator automatically brings the heating characteristic (1; 6) out of its previous position into a new position by means of predetermined functions ($f_1(T_{RW}, T_A)$; $f_2(T_{RW},T_A)$) which are dependent at least on the outside temperature ($T_A$) and the room temperature reference value ($T_{RW}$) by a parallel displacement or by a turning movement or also by a parallel displacement in conjunction with a turning movement.

2. A method according to claim 1 characterised in that the amount of the parallel displacement is determined by a first weighting function dependent on the outside temperature ($T_A$) and the extent of the turning movement is determined by a second weighting function dependent on the outside temperature ($T_A$).

3. A method according to claim 2 characterised in that a respective value in the value range of zero to one is selected for each of the two weighting functions, that the function values of the two weighting functions are made dependent on a difference ($T_{RW}$-$T_A$) formed from the previous room temperature reference value ($T_{RW}$) and a value of the damped outside temperature ($T_A$) and that with each difference ($T_{RW}$-$T_A$) the sum one formed from the function value of the first weighting function and the function value of the second weighting function is selected.

4. A method according to claim 3 characterised in that for a first value range, between zero and a first value ($T_1$), of the difference ($T_{RW}$-$T_A$) the function value of the first weighting function one and the function value of the second weighting function zero are selected, that for a second value range, between the first value ($T_1$) and a second value ($T_2$), of the difference ($T_{RW}$-$T_A$) the function value of the first weighting function decreasing from one linearly to zero is selected and the function value of the second weighting function increasing from zero linearly to one is selected, wherein the first weighting function reaches the function value zero at the second value ($T_2$) and the second weighting function reaches the value one at the second value ($T_2$), and that for a third value range, above the second value ($T_2$), of the difference ($T_{RW}$-$T_A$) the function value of the first weighting function zero is selected and the function value of the second weighting function one is selected.

## Revendications

1. Méthode de réglage de la caractéristique de chauffe (1 ; 6) d'un régulateur de circuit de chauffage d'une installation de chauffage, dont une température d'un fluide caloporteur est adaptable à la demande particulière en flux calorifique et qui comprend un élément de commande pour l'entrée manuelle d'une valeur de consigne de la température ambiante ($T_{RW}$). le réglage de la caractéristique de chauffe (1, 6) étant fonction de la température extérieure ($T_A$),
   caractérisée en ce que
   après une modification manuelle de la valeur de consigne de la température ambiante ($T_{RW}$), le régulateur du circuit de chauffage met automatiquement la caractéristique de chauffe (1 ; 6) à une nouvelle position à partir de sa position actuelle au moyen de fonctions prescrites ($f_1(T_{RW}, T_A)$ ; $f_2(T_{RW}, T_A)$), qui sont dépendantes d'au moins la température extérieure ($T_A$) et de la valeur de consigne de la température ambiante ($T_{RW}$), par un décalage parallèle ou par une rotation ou encore par un décalage parallèle conjointement avec une rotation.

2. Méthode selon la revendication 1, caractérisée en ce que la grandeur du décalage parallèle est aussi déterminée par une première fonction pondérale qui est dépendante de la température extérieure ($T_A$) et l'importance de la rotation est aussi déterminée par une seconde fonction pondérale qui est dépendante de la température extérieure ($T_A$).

3. Méthode selon la revendication 2, caractérisée en ce que une valeur qui est dans la plage de zéro à un est adoptée pour les deux fonctions pondérales, en ce que les valeurs des deux fonctions pondérales sont rendues dépendantes d'une différence ($T_{RW}$ - $T_A$) formée entre une valeur de consigne actuelle de la température ambiante ($T_{RW}$) et une valeur de la température extérieure tempérée ($T_A$) et en ce que pour chaque différence ($T_{RW}$ - $T_A$), la somme adoptée, qui est formée de la valeur de la première fonction pondérale et de la valeur de la seconde fonction pondérale, est égale à un.

4. Méthode selon la revendication 3, caractérisée en ce que la valeur adoptée de la première fonction pondérale est égale à un et la valeur adoptée de la seconde fonction pondérale est égale à zéro pour une première plage de la valeur de la différence ($T_{RW}$ - $T_A$) comprise entre zéro et une première valeur ($T_1$), en ce que, pour une seconde plage de valeurs de la différence ($T_{RW}$ - $T_A$) comprise entre la première valeur ($T_1$) et une seconde valeur ($T_2$), la valeur adoptée de la première fonction pondérale décroît de un linéairement à zéro et la valeur de la seconde fonction pondérale qui est adoptée croît linéairement de zéro à un, la première fonction pondérale atteignant la valeur zéro pour la seconde valeur ($T_2$) et la seconde fonction pondérale atteignant la valeur un pour la seconde valeur ($T_2$) et en ce que, pour une troisième plage de la valeur de la différence ($T_{RW}$ - $T_A$) qui se trouve au-dessus de la seconde valeur ($T_2$), la valeur de la première fonction pondérale qui est adoptée est égale à zéro et la valeur de la seconde fonction pondérale qui est adoptée est égale à un.

**Fig. 1**

**Fig. 2**

**Fig. 3**

**Fig. 4**